# EUROPÄISCHE PATENTSCHRIFT

(11) **EP 2 643 492 B1**
(45) Veröffentlichungstag und Bekanntmachung des Hinweises auf die Patenterteilung: **06.06.2018**
(21) Anmeldenummer: 11820838.8
(22) Anmeldetag: 28.10.2011
(51) Int. Cl.: C22C 38/02, C22C 38/04, C22C 38/06, C22C 38/38, B60K 15/03

(54) **ENERGIE SPEICHERNDES BEHÄLTNIS AUS LEICHTBAUSTAHL**
ENERGY-STORING CONTAINER MADE OF LIGHTWEIGHT STEEL
RÉCIPIENT DE STOCKAGE D'ÉNERGIE EN ACIER DE CONSTRUCTION LÉGER

(30) Priorität: 26.11.2010 DE 102010053153; 24.10.2011 DE 102011117135
(43) Veröffentlichungstag der Anmeldung: 02.10.2013
(73) Patentinhaber: Salzgitter Flachstahl GmbH, 38239 Salzgitter (DE)
(72) Erfinder: BRAUN, Michael, 38165 Lehre (DE); OTTO, Manuel, 38162 Cremlingen (DE); GEORGEOU, Zacharias, 38440 Wolfsburg (DE); SPRINGUB, Bianca, 22767 Hamburg (DE)
(74) Vertreter: Meissner, Peter E.
(86) Internationale Anmeldenummer: PCT/DE2011/001943
(87) Internationale Veröffentlichungsnummer: WO 2012/069035

(56) Entgegenhaltungen:
- EP-A1- 2 090 668
- WO-A2-03/029504
- DE-A1-102005 057 599
- DE-B3-102005 062 221
- DATABASE COMPENDEX [Online] ENGINEERING INFORMATION, INC., NEW YORK, NY, US; Juli 2008 (2008-07), JUNG J K ET AL: "Hydrogen embrittlement behavior of high Mn TRIP/TWIP steels", XP002675796, Database accession no. E20083311456895
- Jong-Ku Jung ET AL: "Hydrogen Embrittlement Behavior of High Mn TRIP/TWIP Steels", HAN'GUG JAERYO HAGHOEJI - KOREAN JOURNAL OF MATERIALS RESEARCH, vol. 18, no. 7, 27 July 2008 (2008-07-27), pages 394-399, XP055311372, KR ISSN: 1225-0562, DOI: 10.3740/MRSK.2008.18.7.394

## Beschreibung

Die Erfindung betrifft ein Energie speicherndes Behältnis aus Leichtbaustahl, insbesondere für Kraftfahrzeuge, gemäß dem Oberbegriff des Anspruches 1.

Derartige Behältnisse speichern z. B. Flüssigkeiten wie Benzin, Diesel, Flüssiggas oder gasförmige Energieträger wie beispielsweise Wasserstoff und müssen insbesondere bei mobilem Einsatz, z. B. in Tankfahrzeugen, PKWs, Schiffen aber auch als Energiespeicher in Satelliten oder Raumfahrzeugen, hohe Sicherheitsstandards erfüllen.

Wenngleich die Erfindung insbesondere für den Bereich der Energie speichernden Behältnisse beschrieben wird, ist der dafür verwendete Leichtbaustahl nicht hierauf beschränkt sondern selbstverständlich auch für andere Anwendungsgebiete wie beispielsweise im Automobil-, Maschinen- oder Stahlbau einsetzbar.

Gerade der stark umkämpfte Automobilmarkt zwingt die Hersteller ständig nach Lösungen zur Senkung des Flottenverbrauchs unter Beibehaltung eines höchstmöglichen Komforts und Insassenschutzes zu suchen. Dabei spielt einerseits die Gewichtsersparnis aller Fahrzeugkomponenten eine entscheidende Rolle andererseits aber auch ein die passive Sicherheit der Passagiere förderndes Verhalten der einzelnen Bauteile bei hohen statischen und dynamischen Beanspruchungen im Betrieb und im Crashfall. Weiterhin sind diese Behältnisse oftmals sehr komplex geformt, um den vorhandenen Bauraum bestmöglich auszunutzen, wodurch sich das Tankvolumen vergrößert.

Energie speichernde Behältnisse aus Stahl, wie z. B. Tanks für Kraftfahrzeuge, sind u. a. aus der DE 10 2005 016 492 A1 bekannt. Um Gewicht einzusparen, werden die Behältnisse aus Stählen mit erhöhter Festigkeit gefertigt, so dass die Wanddicke reduziert werden kann. Bei den hier genannten höherfesten Stahlsorten besteht beispielsweise bei der Speicherung von Wasserstoff oder wasserstoffhaltigen Gasen bei tiefen Temperaturen die Gefahr von wasserstoffinduzierten Spannungsrissen oder Wasserstoffversprödung, wodurch im Crashfall der Behälter bersten kann und durch austretendes Medium gravierende Schäden entstehen können.

Aus der EP 2090668 A1 ist ein hochfester TWIP Stahl bekannt, der 0.7% C, 2,5 % Al, 0,2% Cr, 0,02% P und 0,001% S enhält. Weiterhin ist ein hochfester Triplex-Leichtbaustahl aus der DE 10 2005 057 599A1 bekannt, wobei die Zusammensetzung mit 0,5-2% C,15-40 % Mn,5-15%Al, bis 3% Si und bis 0,5%Cr angegeben wird. Aus der WO 03/029504 A2 ist ein Triplex-Leichtbautstahl für einen Kraftstoffbehälter bekannt, mit 0,5-2% C, 18-35% Mn, 8-12% Al, bis zu 6 % Si, und zumindest einem der Elemente Mg, Ga, Be mit einem Gehalt von jeweils bis zu 3%.

Schließlich lehrt die DE 10 2005 062 221 B3, dass die Gefahr einer Wasserstoffversprödung bei AISi-TWIP Stählen durch eine geeignete Auswahl der C und Mn-Anteile verringert werden kann. Der Erfindung liegt die Aufgabe zugrunde, ein Energie speicherndes Behältnis anzugeben, welches im Crashfall eine hohe Duktilität aufweist und wasserstoffinduzierte Spannungsrisse oder eine Wasserstoffversprödung des Bauteils verhindert. Diese Aufgabe wird durch den Gegenstand von Anspruch 1 gelöst.

Nach der Lehre der Erfindung wird für ein Energie speicherndes Behältnis ein Leichtbaustahl eingesetzt mit folgender chemischen Zusammensetzung (in Gew.-%):
C 0,04 - 2%
Mn 14-30%
Al 1,5 12%
Si 0,3% - 3%
Cr 0,12 - 6%
sowie zusätzlich eines oder mehrere der Elemente:
Ti, V, Nb, B, Zr, Mo, Ni, Cu, W, Co, P, N mit je bis zu 5% und in Summe bis zu 10%, wobei der Rest Fe einschließlich üblicher Stahlbegleitelemente ist und wobei die konkrete Legierungszusammensetzung zur Begrenzung des α'- Martensit-Anteils vor oder nach einer Umformung auf maximal 3% mit der Maßgabe gewählt wird, dass das α' -Martensit-Äquivalent gemäß
0,1 * Gew.% Mn + Gew.% C+ 0.5 * Gew.% Al+ 0.05 * Gew.% Si zwischen 3,4 und 10,5 liegt.

In den letzten Jahren hat es große Entwicklungsfortschritte auf dem Gebiet der sogenannten Leichtbaustähle gegeben, die sich durch ein geringes spezifisches Gewicht bei gleichzeitig hoher Festigkeit und Zähigkeit auszeichnen (z. B. EP 0 489 727 B1, EP 0 573 641 B1,

DE 199 00 199 A1) sowie eine hohe Duktilität aufweisen und damit für den Fahrzeugbau von großem Interesse sind.

Bei diesen im Ausgangszustand austenitischen Stählen wird durch den hohen Anteil von Legierungsbestandteilen mit einem spezifischen Gewicht weit unterhalb des spezifischen Gewichts von Eisen (Mn, Si, Al) eine für die Automobilindustrie vorteilhafte Gewichtsreduzierung unter Beibehaltung der bisherigen Konstruktionsbauweise erreicht.

Diese bekannten Leichtbaustähle weisen ein teilstabilisiertes γ -Mischkristall-Gefüge mit definierter Stapelfehlerenergie mit einem z. T. multiplen TRIP- (Transformation Induced Plasticity) Effekt auf, der die spannungs- oder dehnungsinduzierte Umwandlung eines flächenzentrierten γ -Mischkristalls (Austenit) in einen ε -Martensit (hexagonal dichteste Kugelpackung), der dann bei weiterer Verformung in einen raumzentrierten α' -Martensit und Rest-Austenit transformiert.

Der hohe Umformgrad wird durch TRIP-, TWIP- (Twinning Induced Plasticity) und SIP- (Shear band Induced Plasticity) Eigenschaften des Stahles erreicht.

Wie Versuche gezeigt haben, weisen sowohl niedrig legierte konventionelle TRIP-Stähle wie auch hochlegierte TRIP-Stähle mit geringem Al-Gehalt aufgrund ihrer Gefügestruktur und chemischen Zusammensetzung eine Neigung zur Wasserstoffversprödung auf, die den Einsatz als Leichtbaustahl für Energie speichernde Behältnisse verhindern. Dabei kann es bei vorhandenen Eigenspannungen im Material in Abhängigkeit vom Gefüge und der Festigkeit zu einer durch Wasserstoff ausgelösten verzögerten Versprödung und in deren Folge zu einer Rissbildung kommen.

Bei Versuchen mit TRIP-Effekt aufweisenden Stählen hat sich überraschend herausgestellt, dass der Anteil an α' -Martensit im Stahl einen maßgebenden Einfluss auf die Anfälligkeit zur Wasserstoffversprödung ausübt. Bei einer Beschränkung auf einen maximalen Gehalt von 3% wurden keine negativen Effekte mehr festgestellt.

Hierbei hat einerseits die konkrete Legierungszusammensetzung des Leichtbaustahls Einfluss auf die Bildung von α' -Martensit andererseits auch eine eventuell auf den Stahl bzw. das Stahlblech einwirkende Verformung.

Die Legierungszusammensetzung sollte so gewählt werden, dass eine möglichst stabile Austenitphase im Stahl vorhanden ist. Bei Leichtbaustählen, die eine starke metastabile Austenitphase aufweisen, transformiert der metastabile Austenit durch aufgeprägte mechanische Spannungen in den für die beschriebene Anwendung schädlichen α'- Martensit (TRIP-Effekt).

Beim Auftreten des TRIP-Effektes kommt es je nach Legierungszusammensetzung zur Bildung der α' -Martensitphase z. T. über die metastabile α' -Martensitphase. In Bereichen, in denen der Werkstoff z. B. unter Druckspannung umgeformt wird, kann dabei die dichter gepackte α -Martensitphase nach dem Prinzip des kleinsten Zwanges auch nach der Umformung vorliegen und bei Entlastung in die a' -Martensitphase umklappen.

Bei diesem Umklappen von der α -Martensitphase in die α' -Martensitphase muss der Wasserstoff wegen der niedrigeren Löslichkeit entweichen und führt entweder atomar oder rekombiniert zur Schwächung des Materials und gegebenenfalls zum Reißen.

Ausgehend von einer Legierung mit C und Mn führt die Zugabe von Al und/oder Si zu einer Destabilisierung der α' -Martensitphase. Das verringert die Gefahr einer Wasserstoffversprödung bzw. erhöht den Spielraum für den Stahlwerker auch bei Überschreitung des Maximalwertes des Wasserstoffs die abgegossene Schmelze noch als tolerierbar einzustufen. Weniger Abwertungen erhöhen das Ausbringen und damit die Wirtschaftlichkeit des Verfahrens.

Unabhängig von der Wirkung der Zugabe von Al und/oder Si ist der Kohlenstoffgehalt ein entscheidendes Element im vorgeschlagenen Legierungskonzept, da er die Austenit-Phase stabilisiert und den Wasserstoff von den freien Gitterplätzen verdrängt.

Beispielsweise weisen Legierungen mit
0,7 % C, 15 % Mn, 2,5 %Al, 2,5 % Si, 0,12% Cr
0,4 % C, 18 % Mn, 2,5 %Al, 2,5 % Si, 0,12% Cr
sowie
1,0% C, 22 % Mn, 9 % Al, 0,6% Si, 0,12% Cr
neben hervorragenden mechanischen Eigenschaften, keinen oder einen nur sehr geringen Anteil an α'- Martensit auf und sind daher vorzüglich für Energie speichernde Behältnisse, insbesondere Wasserstofftanks, geeignet.

In Versuchen mit tiefgezogenem Napf unter korrosiver Beanspruchung wies die erfindungsgemäße Legierung eine hohe Resistenz gegenüber wasserstoffinduzierter Spannungsrisskorrosion auf, die wesentlich höher lag als bei α' -Martensit enthaltenden TRIP-Stählen unter vergleichbaren Rahmenbedingungen (Festigkeit, Medium, Spannungszustand ...).

Die erfindungsgemäße Legierung eignet sich demzufolge hervorragend zur Verwendung z. B. für Behältnisse zur Speicherung von Wasserstoff aber auch für andere Wasserstoff oder Schwefelwasserstoff enthaltende Medien.

Ein weiterer Vorteil im Vergleich zu Leichtbaustählen mit α' -Martensit ergibt sich im Falle von Überbeanspruchungen, z. B. durch erhöhten Betriebsdruck oder Crash. Stähle mit der erfindungsgemäßen Legierungszusammensetzung mit einem maximalen Anteil an α'- Martensit von 3% können aufgrund des dann vorherrschenden TWIP-/SIP-Verfestigungs-Verhaltens im Vergleich zu TRIP-Stählen ein höheres Niveau an Energie aufnehmen, bevor es zu einem Bauteilversagen kommt.

Die vorgenannten Eigenschaften dieses erfindungsgemäßen Leichtbaustahls prädestinieren ihn deshalb für Energie speichernde Behältnisse, die mobil transportiert werden, z. B. in Kraftfahrzeugen, Tankfahrzeugen, Schiffen oder auch in Satelliten.

Durch Zugabe weiterer Legierungselemente wie Ti, V, Nb, B, Zr, Mo, Ni, Cu, W, Co, P, N mit Gehalten je bis zu 5% und in Summe bis zu 10% können darüber hinaus werkstoffspezifische Eigenschaften gezielt eingestellt werden. Beispielsweise bewirken neben einer erhöhten Zugabe von Al mit bis zu 12% eine Zugabe von Co, Mo oder V eine Erhöhung der Warmfestigkeit.

Eine höhere Warmfestigkeit ist beispielsweise bei hoher Temperaturbeanspruchung, wie z. B. bei einem Brand, von Vorteil, da die Integrität des Behältnisses länger aufrecht erhalten bleibt als bei bisher bekannten α'- Martensit enthaltenden TRIP-Stählen,

Als vorteilhaft bezüglich der Korrosionsbeständigkeit hat sich ein Mindestgehalt an Chrom von 2% und Maximalgehalt von 6 % herausgestellt. Bei einer Zugabe von unter 2% zeigt Chrom keinen entscheidenden Einfluss auf die Korrosionsbeständigkeit. Es bildet sich ein Mischkristall und die für die Korrosionsbeständigkeit verantwortliche Chromoxidbeschichtung kann sich nicht bilden. Bei einer Chrom-Zugabe von über 6% kann sich nach einer langen Standzeit die spröde Sigma-Phase bilden. Soll dagegen nur die Duktilität des Behälters erheblich gesteigert werden, erfolgt eine Zugabe von Chrom in Gehalten von 0,12 bis <2%.

Weiterhin können komplexe Behälterstrukturen umformtechnisch vorteilhaft durch den erfindungsgemäßen Leichtbaustahl nach Anspruch 5, aufweisend eine Bruchdehnung A80 von >40% hergestellt werden.

Eine weitere Verbesserung der Werkstoffeigenschaften im Hinblick auf eine Wasserstoffversprödung kann in einer vorteilhaften Weiterentwicklung der Erfindung erreicht werden, wenn die Legierungsgehalte ebenfalls unter Einschränkung des Anteils an α'- Martensit in den in Anspruch 4 angegebenen Grenzen gehalten werden.

Ein Leichtbaustahl mit dieser Legierungszusammensetzung weist dabei eine so genannte TRIPLEX-Struktur auf, d. h. es liegt eine dreiphasige Mikrostruktur vor. Die bei TRIPLEX-Stählen nanodispers verteilten Kappa-Karbide im Gefüge bewirken dabei zusätzlich eine hohe Resistenz gegenüber der Wasserstoffversprödung.

## Patentansprüche

1. Energie speicherndes Behältnis hergestellt aus einem Leichtbaustahl mit folgender chemischen Zusammensetzung (in Gew.-%):
C 0,04 - 2%
Mn 14 - 30%
Al 1,5 - 12%
Si 0,3 - 3%
Cr 0,12 - 6%
sowie zusätzlich eines oder mehrere der Elemente:
Ti, V, Nb, B, Zr, Mo, Ni, Cu, W, Co, P, N mit je bis zu 5% und in Summe bis zu 10 % wobei der Rest Fe einschließlich üblicher Stahlbegleitelemente ist, wobei die konkrete Legierungszusammensetzung zur Begrenzung des α'- Martensit-Anteils vor oder nach einer Umformung auf maximal 3% mit der Maßgabe gewählt wird, dass das α'- Martensit-Äquivalent gemäß
0,1 * Gew.% Mn + Gew.% C+ 0.5 * Gew.% Al+ 0.05 * Gew.% Si zwischen 3,4 und 10,5 liegt.

2. Energie speicherndes Behältnis nach Anspruch 1
**dadurch gekennzeichnet,**
**dass** der Cr-Gehalt 2 - 6% beträgt.

3. Energie speicherndes Behältnis nach Anspruch 1
**dadurch gekennzeichnet,**
**dass** der Cr-Gehalt 0,12 - < 2% beträgt.

4. Energie speicherndes Behältnis nach Anspruch 1
**dadurch gekennzeichnet,**
**dass** der zur Herstellung verwendete Leichtbaustahl eine Triplex-Struktur mit fein verteilten Kappa-Karbiden und folgende chemische Zusammensetzung (in Gew.-%) aufweist:
C 0,5 - 1,2%
Mn 14 - 22%
Al 6 - 10%
Si 0,3 - 3%
Cr <4%

## Claims

1. An energy-storing container produced using a lightweight construction steel having the following chemical composition (in wt %):
C 0.04 - 2%
Mn 14 - 30%
Al 1.5 - 12%
Si 0.3 - 3%
Cr 0.12 - 6%,
and additionally one or more of the elements
Ti, V, Nb, B, Zr, Mo, Ni, Cu, W, Co, P and N with up to 5% of each and up to 10% in total, the remainder being Fe including common steel tramp elements, wherein the specific alloy composition is selected to limit the α'-martensite content to no more than 3% before or after a deformation, with the proviso that the α'-martensite equivalent according to
0.1 * wt.% Mn + wt.% C + 0.5 * wt-% Al + 0.05 * wt.% Si is between 3.4 and 10.5.

2. The energy-storing container according to claim 1,
**characterised in that**
the Cr content is 2 - 6%.

3. The energy-storing container according to claim 1,
**characterised in that**
the Cr content is 0.12 to <2%.

4. The energy-storing container according to claim 1,
**characterised in that**
the lightweight construction steel used for its production has a triplex structure with finely divided kappa carbides and the following chemical composition (in wt %):
C 0.5 - 1.2%
Mn 14 - 22%
Al 6 - 10%
Si 0.3 - 3%
Cr <4%.

## Revendications

1. Récipient de stockage d'énergie fabriqué à partir d'un acier de construction léger avec la composition chimique qui suit (en % en poids) :
| | |
|---|---|
| C | 0,04 - 2 % |
| Mn | 14 - 30 % |
| Al | 1,5 - 12 % |
| Si | 0,3 - 3 % |
| Cr | 0,12 - 6 % |
ainsi qu'en supplément un ou plusieurs des éléments :
Ti, V, Nb, B, Zr, Mo, Ni, Cu, W, Co, P, N avec respectivement jusqu'à 5 % et de manière cumulée jusqu'à 10 %, dans lequel le reste est du Fe y compris des éléments accompagnant l'acier habituellement, dans lequel la composition d'alliage concrète est choisie afin de limiter la fraction martensitique α' avant ou après une mise en forme à maximum 3 % à condition que l'équivalent martensitique α' selon
0,1 * % en poids Mn + % en poids C+ 0,5 * % en poids Al +0,05 * % en poids Si
se situe entre 3,4 et 10,5.

2. Récipient de stockage d'énergie selon la revendication 1,
**caractérisé en ce**
**que** la teneur de Cr présente une valeur de 2 - 6 %.

3. Récipient de stockage d'énergie selon la revendication 1,
**caractérisé en ce**
**que** la teneur de Cr présente une valeur de 0,12 - < 2 %.

4. Récipient de stockage d'énergie selon la revendication 1,
**caractérisé en ce**
**que** l'acier de construction léger utilisé aux fins de la fabrication présente une structure triplex avec des carbures kappa répartis finement et la composition chimique qui suit (en % en poids) :
| | |
|---|---|
| C | 0,5 - 1,2 % |
| Mn | 14 - 22 % |
| Al | 6 - 10 % |
| Si | 0,3 - 3 % |
| Cr | < 4 %. |
